# EUROPEAN PATENT APPLICATION

(11) **EP 4 243 234 A1**
(43) Date of publication of application: **13.09.2023**
(21) Application number: 21958798.7
(22) Date of filing: 29.09.2021
(51) Int. Cl.: H02J 3/32, B60L 53/66

(54) **ELECTRIC ENERGY DISPATCHMENT METHOD, VEHICLE CONTROL UNIT, BATTERY MANAGEMENT SYSTEM, SYSTEM, DEVICE AND MEDIUM**

(71) Applicant: Contemporary Amperex Technology Co., Limited, Ningde, Fujian 352100 (CN)
(72) Inventor: LIN, Longzhen, Ningde, Fujian 352100 (CN); WANG, Xiao, Ningde, Fujian 352100 (CN); YAN, Yu, Ningde, Fujian 352100 (CN)
(74) Representative: Rowlands, Stuart Michael
(86) International application number: PCT/CN2021/121920
(87) International publication number: WO 2023/050210

(57) **Abstract**

An electric energy dispatchment method and apparatus, and a system, a device and a medium. The method comprises: during a dispatchment process of electric energy dispatchment between a grid (40) and a battery (P1) of a vehicle (20) by means of a charging and discharging apparatus (10) on a grid dispatchment platform (30), receiving charging/discharging completion information, which is sent by a BMS (21); according to the charging/discharging completion information, determining whether a dispatchment mode of the dispatchment process is a target dispatchment mode; and when the dispatchment mode is the target dispatchment mode, allowing the BMS (21) to accept electric energy dispatchment from the grid dispatchment platform (30).

## Description

### Technical Field

The present application relates to the technical field of electric power and, in particular, to an electric energy dispatch method, a vehicle control unit, a battery management system, a system, a device and a medium.

### Background

With the development of new energy technology, the application fields of batteries are becoming more and more extensive. Batteries, for example, may be used as power sources to power electrical devices, thereby reducing the use of non-renewable resources. With the development of batteries, the charging technology of batteries is also developing rapidly.

With the development of charging technology, a grid dispatch platform can realize two-way flexible electric energy dispatch between the grid and a vehicle through a charging and discharging apparatus that supports Vehicle-to-grid (V2G) technology. For example, the grid dispatch platform may dispatch the electric energy from the grid to a power battery of the vehicle according to requirements, or may dispatch the electric energy from the power battery of the vehicle to the grid according to requirements.

Nowadays, there is a lack of a solution that can rationally control a dispatch process for two-way electric energy dispatch between a grid and a vehicle.

### Summary of the Invention

Embodiments of the present application provide an electric energy dispatch method, a vehicle control unit, a battery management system, a system, a device and a medium, which can rationally control a dispatch process for two-way electric energy dispatch between a grid and a vehicle.

In a first aspect, an embodiment of the present application provides an electric energy dispatch method applied to a vehicle control unit (VCU) of a vehicle, the method including:
receiving charging and discharging completion information sent by a battery management system (BMS) during a dispatch process for an electric energy dispatch of a grid dispatch platform that is performed between a grid and a battery of the vehicle by means of a charging and discharging apparatus, the charging and discharging completion information being sent by the BMS when a first electrical performance parameter of the battery meets a preset charging and discharging cut-off condition;
determining whether a dispatch mode of the dispatch process is a target dispatch mode according to the charging and discharging completion information, the target dispatch mode being a two-way electric energy dispatch mode between the grid and the battery; and
allowing the BMS to accept the electric energy dispatch of the grid dispatch platform when the dispatch mode is the target dispatch mode.

In the electric energy dispatch method of the embodiment of the present application, during the electric energy dispatch of the grid dispatch platform that is performed between the grid and the vehicle by means of the charging and discharging apparatus, the BMS may send the charging and discharging completion information to the VCU of the vehicle when the first electrical performance parameter of the battery meets the preset charging and discharging cut-off condition, and the VCU may determine whether the dispatch mode of the dispatch process is the target dispatch mode for two-way electric energy dispatch between the grid and the vehicle according to dispatch mode information in the charging and discharging completion information. In the target dispatch mode, the VCU allows the BMS to continue to accept the electric energy dispatch of the grid dispatch platform, so that the vehicle can continue to accept the flexible dispatch of the grid dispatch platform. The charging and discharging process of the vehicle can be rationally controlled during the dispatch process for the two-way electric energy dispatch between the grid and the vehicle, compared with a solution for controlling the BMS to end the charging and discharging procedure upon receiving the charging and discharging completion information.

In an optional implementation, the charging and discharging completion information includes dispatch representation information, and the determining of whether a dispatch mode of the dispatch process is a target dispatch mode according to the charging and discharging completion information includes:
determining whether a dispatch mode characterized by the dispatch mode information is a target dispatch mode.

With this embodiment, the VCU may determine the electric energy dispatch mode from the dispatch mode information in the charging and discharging completion information, and thus may choose whether to control the BMS to end the electric energy dispatch according to the electric energy dispatch mode, so that whether the current electric energy dispatch process is the two-way electric energy dispatch process between the grid and the battery can be accurately identified, thereby facilitating the adoption of different control strategies according to different dispatch processes.

In an optional implementation, the determining of whether a dispatch mode of the dispatch process is a target dispatch mode according to the charging and discharging completion information includes:
determining whether the charging and discharging completion information includes a target identifier, wherein the target identifier is added to the charging and discharging completion information by the BMS when determining that the dispatch mode is a dispatch mode other than the target dispatch mode, and the target identifier is a full charge identifier or a full discharge identifier.

With this embodiment, the VCU may determine the electric energy dispatch mode according to whether the charging and discharging completion information includes the target identifier, and thus may choose whether to control the BMS to end the electric energy dispatch according to the electric energy dispatch mode, so that whether the current electric energy dispatch process is the two-way electric energy dispatch process between the grid and the battery can be accurately identified, thereby facilitating the adoption of different control strategies according to different dispatch processes.

In an optional implementation, allowing the BMS to accept the electric energy dispatch of the grid dispatch platform when the dispatch mode is the target dispatch mode specifically includes:
not sending a charging and discharging end instruction to the BMS when the dispatch mode is the target dispatch mode.

With this embodiment, as the VCU does not send the charging and discharging end instruction, the two-way electric energy dispatch procedure between the grid and the battery can be rationally controlled by only changing a communication strategy on the VCU side, improving the convenience of control.

In a second aspect, an embodiment of the present application provides an electric energy dispatch method applied to a battery management system (BMS), the method including:
acquiring a first electrical performance parameter of a battery of the vehicle during a dispatch process for an electric energy dispatch of a grid dispatch platform that is performed between a grid and the battery by means of a charging and discharging apparatus; and
sending charging and discharging completion information to a vehicle control unit (VCU) of the vehicle when the first electrical performance parameter meets a preset charging and discharging cut-off condition, such that the VCU determines whether a dispatch mode of the electric energy dispatch is a target dispatch mode according to the charging and discharging completion information, and allows the BMS to accept the electric energy dispatch of the grid dispatch platform when the dispatch mode is the target dispatch mode.

In the electric energy dispatch method of the embodiment of the present application, during the electric energy dispatch of the grid dispatch platform that is performed between the grid and the vehicle by means of the charging and discharging apparatus, the BMS may send the charging and discharging completion information to the VCU of the vehicle when the first electrical performance parameter of the battery meets the preset charging and discharging cut-off condition, and the VCU may determine whether the dispatch mode of the dispatch process is the target dispatch mode for two-way electric energy dispatch between the grid and the vehicle according to the charging and discharging completion information. In the target dispatch mode, the VCU allows the BMS to continue to accept the electric energy dispatch of the grid dispatch platform, so that the vehicle can continue to accept the flexible dispatch of the grid dispatch platform. The charging and discharging process of the vehicle can be rationally controlled during the dispatch process for the two-way electric energy dispatch between the grid and the vehicle, compared with a solution for controlling the BMS to end the charging and discharging procedure upon receiving the charging and discharging completion information.

In an optional implementation, after the sending of the charging and discharging completion information to the VCU of the vehicle, the method further includes:
receiving charging and discharging end information sent by the grid dispatch platform; and
ending the electric energy dispatch in response to the charging and discharging end information sent by the VCU.

With this implementation, the two-way dispatch mode between the grid and the battery can be ended under the control of the grid dispatch platform, improving the rationality of the two-way dispatch.

In an optional implementation, the charging and discharging end information is sent to the BMS by the grid dispatch platform when it is determined that an electric energy dispatch parameter acquired in real time meets a target dispatch condition.

The electric energy dispatch parameter includes: a dispatch time parameter and/or a second electrical performance parameter of the battery,
wherein, when the electric energy dispatch parameter includes the dispatch time parameter, the target dispatch condition consists in that the dispatch time parameter acquired in real time reaches a target dispatch time parameter; and
when the electric energy dispatch parameter includes the second electrical performance parameter, the target dispatch condition consists in that the second electrical performance parameter acquired in real time reaches a target electrical performance parameter.

Through this implementation, with this embodiment, the grid dispatch platform may acquire the electric energy dispatch parameter in real time, and send the charging and discharging end information to the VCU to prompt same to end the electric energy dispatch when the electric energy dispatch parameter meets the target dispatch condition. Since the electric energy dispatch parameter can reflect the real-time electric energy dispatch state, the grid dispatch platform accurately controls the electric energy dispatch process according to the electric energy dispatch state.

In an optional implementation, the VCU does not respond to the charging and discharging completion information when the dispatch mode is the target dispatch mode.

With this embodiment, as the VCU does not send the charging and discharging end instruction, the two-way electric energy dispatch procedure between the grid and the battery can be rationally controlled by only changing a communication strategy on the VCU side, improving the convenience of control.

In a third aspect, an embodiment of the present application provides a vehicle control unit (VCU), including:
an information receiving module for receiving charging and discharging completion information sent by a battery management system (BMS) during a dispatch process for an electric energy dispatch of a grid dispatch platform that is performed between a grid and a battery of the vehicle by means of a charging and discharging apparatus, wherein the charging and discharging completion information includes dispatch mode information, and the charging and discharging completion information is sent by the BMS when a first electrical performance parameter of the battery meets a preset charging and discharging cut-off condition;
a mode determination module for determining whether a dispatch mode of the dispatch process is a target dispatch mode according to the dispatch mode information, the target dispatch mode being a two-way electric energy dispatch mode between the grid and the battery; and
a control module for allowing the BMS to accept the electric energy dispatch of the grid dispatch platform when the dispatch mode is the target dispatch mode.

In the VCU of the embodiment of the present application, during the electric energy dispatch of the grid dispatch platform that is performed between the grid and the vehicle by means of the charging and discharging apparatus, the BMS may send the charging and discharging completion information to the VCU of the vehicle when the first electrical performance parameter of the battery meets the preset charging and discharging cut-off condition, and the VCU may determine whether the dispatch mode of the dispatch process is the target dispatch mode for two-way electric energy dispatch between the grid and the vehicle according to dispatch mode information in the charging and discharging completion information. In the target dispatch mode, the VCU allows the BMS to continue to accept the electric energy dispatch of the grid dispatch platform, so that the vehicle can continue to accept the flexible dispatch of the grid dispatch platform. The charging and discharging process of the vehicle can be rationally controlled during the dispatch process for the two-way electric energy dispatch between the grid and the vehicle, compared with a solution for controlling the BMS to end the charging and discharging procedure upon receiving the charging and discharging completion information.

In a fourth aspect, an embodiment of the present application provides a battery management system (BMS), including:
a parameter acquisition module for acquiring a first electrical performance parameter of a battery of the vehicle during an electric energy dispatch of a grid dispatch platform that is performed between a grid and the battery by means of a charging and discharging apparatus; and
an information sending module for sending charging and discharging completion information to a vehicle control unit (VCU) of the vehicle when the first electrical performance parameter meets a preset charging and discharging cut-off condition, such that the VCU determines whether a dispatch mode of the electric energy dispatch is a target dispatch mode according to the dispatch mode information in the charging and discharging completion information, and allows the BMS to accept the electric energy dispatch of the grid dispatch platform when the dispatch mode is the target dispatch mode.

In the BMS of the embodiment of the present application, during the electric energy dispatch of the grid dispatch platform that is performed between the grid and the vehicle by means of the charging and discharging apparatus, the BMS may send the charging and discharging completion information to the VCU of the vehicle when the first electrical performance parameter of the battery meets the preset charging and discharging cut-off condition, and the VCU may determine whether the dispatch mode of the dispatch process is the target dispatch mode for two-way electric energy dispatch between the grid and the vehicle according to dispatch mode information in the charging and discharging completion information. In the target dispatch mode, the VCU allows the BMS to continue to accept the electric energy dispatch of the grid dispatch platform, so that the vehicle can continue to accept the flexible dispatch of the grid dispatch platform. The charging and discharging process of the vehicle can be rationally controlled during the dispatch process for the two-way electric energy dispatch between the grid and the vehicle, compared with a solution for controlling the BMS to end the charging and discharging procedure upon receiving the charging and discharging completion information.

In the fifth aspect, an electric energy dispatch device is provided, including:
a vehicle control unit (VCU) provided in the third aspect or in any optional implementation of the third aspect, and
a battery management system (BMS) provided in the fourth aspect or in any optional implementation of the fourth aspect.

In the electric energy dispatch system of the embodiment of the present application, during the electric energy dispatch of the grid dispatch platform that is performed between the grid and the vehicle by means of the charging and discharging apparatus, the BMS may send the charging and discharging completion information to the VCU of the vehicle when the first electrical performance parameter of the battery meets the preset charging and discharging cut-off condition, and the VCU may determine whether the dispatch mode of the dispatch process is the target dispatch mode for two-way electric energy dispatch between the grid and the vehicle according to dispatch mode information in the charging and discharging completion information. In the target dispatch mode, the VCU allows the BMS to continue to accept the electric energy dispatch of the grid dispatch platform, so that the vehicle can continue to accept the flexible dispatch of the grid dispatch platform. The charging and discharging process of the vehicle can be rationally controlled during the dispatch process for the two-way electric energy dispatch between the grid and the vehicle, compared with a solution for controlling the BMS to end the charging and discharging procedure upon receiving the charging and discharging completion information.

In the sixth aspect, an electric energy dispatch device is provided, including:
a processor, and a memory in which computer program instructions are stored, wherein
the processor reads and executes the computer program instructions to implement an electric energy dispatch method provided in the first aspect or in any optional implementation of the first aspect, or to implement an electric energy dispatch method provided in the second aspect or in any optional implementation of the second aspect.

In the electric energy dispatch device of the embodiment of the present application, during the electric energy dispatch of the grid dispatch platform that is performed between the grid and the vehicle by means of the charging and discharging apparatus, the BMS may send the charging and discharging completion information to the VCU of the vehicle when the first electrical performance parameter of the battery meets the preset charging and discharging cut-off condition, and the VCU may determine whether the dispatch mode of the dispatch process is the target dispatch mode for two-way electric energy dispatch between the grid and the vehicle according to dispatch mode information in the charging and discharging completion information. In the target dispatch mode, the VCU allows the BMS to continue to accept the electric energy dispatch of the grid dispatch platform, so that the vehicle can continue to accept the flexible dispatch of the grid dispatch platform. The charging and discharging process of the vehicle can be rationally controlled during the dispatch process for the two-way electric energy dispatch between the grid and the vehicle, compared with a solution for controlling the BMS to end the charging and discharging procedure upon receiving the charging and discharging completion information.

In a seventh aspect, a computer storage medium is provided, wherein computer program instructions are stored in the computer storage medium, and the computer program instructions, when executed by a processor, implement an electric energy dispatch method provided in the first aspect or in any optional implementation of the first aspect, or an electric energy dispatch method provided in the second aspect or in any optional implementation of the second aspect.

In the computer storage medium of the embodiment of the present application, during the electric energy dispatch of the grid dispatch platform that is performed between the grid and the vehicle by means of the charging and discharging apparatus, the BMS may send the charging and discharging completion information to the VCU of the vehicle when the first electrical performance parameter of the battery meets the preset charging and discharging cut-off condition, and the VCU may determine whether the dispatch mode of the dispatch process is the target dispatch mode for two-way electric energy dispatch between the grid and the vehicle according to dispatch mode information in the charging and discharging completion information. In the target dispatch mode, the VCU allows the BMS to continue to accept the electric energy dispatch of the grid dispatch platform, so that the vehicle can continue to accept the flexible dispatch of the grid dispatch platform. The charging and discharging process of the vehicle can be rationally controlled during the dispatch process for the two-way electric energy dispatch between the grid and the vehicle, compared with a solution for controlling the BMS to end the charging and discharging procedure upon receiving the charging and discharging completion information.

### Description of Drawings

In order to more clearly illustrate the technical solutions of the embodiments of the present application, the drawings to be used in the description of the embodiments of the present application will be described briefly below. It will be apparent that the drawings in the following description are merely some embodiments of the present application. For those skilled in the art, other drawings can also be obtained according to these drawings without any creative effort.
Fig. 1 is a schematic diagram of an exemplary electric energy dispatch scenario provided in an embodiment of the present application;
Fig. 2 is a schematic flowchart of an electric energy dispatch method provided in an embodiment of the present application;
Fig. 3 is a schematic flowchart of another electric energy dispatch method provided in an embodiment of the present application;
Fig. 4 is a schematic flowchart of still another electric energy dispatch method provided in an embodiment of the present application;
Fig. 5 is a schematic flowchart of a further electric energy dispatch method provided in an embodiment of the present application;
Fig. 6 is a schematic flowchart of a still further electric energy dispatch method provided in an embodiment of the present application;
Fig. 7 is a schematic flowchart of an exemplary electric energy dispatch method provided in an embodiment of the present application;
Fig. 8 is a structural schematic diagram of a vehicle control unit (VCU) provided in an embodiment of the present application;
Fig. 9 is a structural schematic diagram of a battery management system (BMS) provided in an embodiment of the present application;
Fig. 10 is a structural schematic diagram of a grid dispatch system provided in an embodiment of the present application; and
Fig. 11 shows a schematic diagram of a hardware structure of an electric energy dispatch device provided in an embodiment of the present application.

### Detailed Description

Implementations of the present application are described in further detail below in conjunction with the drawings and embodiments. The following detailed description of the embodiments and the drawings are used to illustrate the principles of the present application by way of example, but should not be used to limit the scope of the present application. That is, the present application is not limited to the described embodiments.

It should be noted that relational terms herein, such as first and second and the like, are used solely to distinguish one from another entity or action without necessarily requiring or implying any actual such relationship or order between such entities or actions. Furthermore, the terms "comprising", "including," or any variation thereof, are intended to cover a non-exclusive inclusion, such that a process, method, article, or device that includes a list of elements does not include only those elements but may include other elements not expressly listed or inherent to such a process, method, article, or device. In the absence of more restrictions, the element defined by the phrase "comprising ......" do not preclude the presence of a further identical element in the process, method, article or device that comprising the element.

Vehicle-to-grid (V2G) technology refers to a technology in which electric energy can flow in both directions between a battery of a vehicle and a grid. The grid may charge the battery of the vehicle by means of a charging and discharging apparatus which supports the V2G technology, and the vehicle may transmit electric energy from the battery to the grid by means of the charging and discharging apparatus that supports the V2G technology. The vehicle in the embodiments of the present application may be a vehicle such as a truck, an automobile or a bus that uses a power battery as a power source.

In an electric energy dispatch strategy in the related art, a battery management system (BMS) of the vehicle may send charging and discharging completion information to a vehicle control unit (VCU) of the vehicle after determining that the battery of the vehicle is fully charged or fully discharged. After receiving the charging and discharging completion information, the VCU sends a charging and discharging end instruction to the BMS. The BMS exits the electric energy dispatch procedure in response to the charging and discharging end instruction. After the BMS exits the electric energy dispatch procedure, if there is no manual intervention, the battery of the vehicle cannot continue to charge and discharge. Correspondingly, the grid dispatch platform cannot continue to perform the electric energy dispatch between the grid and the battery of the vehicle.

However, in the actual electric energy dispatch scenario, when flexible two-way electric energy dispatch between the grid and the battery of the vehicle is required, there may be situations where the battery of the vehicle is fully charged first and then discharged, or the battery of the vehicle is fully charged and then charged. In these situations, when the vehicle is fully charged or fully discharged, the VCU will control the BMS to end the dispatch procedure, so that the vehicle cannot continue to accept the electric energy dispatch of the grid dispatch platform in the subsequent process.

In an example scenario, if, in a certain area, 00:00 to 06:00 every day is the trough power consumption period, and 18:00 to 24:00 every day is the peak power consumption period, a vehicle owner will drive a vehicle with a battery having a state of charge (SOC) of 40% into a charging station at 14:00 on the first day and choose to pick up the vehicle at 8:00 in the morning of the next day, set the target SOC to 100%, and select the target dispatch mode as described above.

In this scenario, the grid dispatch platform hopes to transmit all the remaining power of the battery having the SOC of 40% on the vehicle to the grid during the peak power consumption period of the first day, that is, between 18:00 and 24:00 on the first day, so as to perform frequency and peak regulation on the grid. Then, during the low power consumption period of the next day, that is, between 00:00 and 06:00 on the next day, the grid is used to charge the battery on the vehicle to 100% to meet the charging needs of the vehicle owner.

However, the use of the above-mentioned related art will result that after the vehicle transmits all the remaining power of the battery having the SOC of 40% on the vehicle to the grid between 18:00 and 24:00 on the first day, the BMS determines that the battery is fully discharged and sends charging and discharging completion information to the VCU, the VCU then controls the BMS to exit the electric energy dispatch procedure, and the vehicle cannot continue to accept the dispatch of the grid dispatch platform. For example, the battery of the vehicle should have been charged to the SOC of 100% between 00:00 and 06:00 the next day, but the vehicle has exited the electric energy dispatch procedure, resulting in the failure to charge the battery. When the vehicle owner picks up the vehicle at 8:00 am on the agreed next day, the battery of the vehicle has the SOC of 0%, that is, the power of the battery of the vehicle is empty. Consequently, the electric energy dispatch solution in the related art cannot rationally control the process of two-way electric energy dispatch between the grid and the vehicle.

Therefore, there is a need for a solution applicable to two-way electric energy dispatch between a grid and a vehicle.

In view of this, the present application proposes an electric energy dispatch method, an apparatus, a system, a device, and a medium, which can be applied to a scenario where a charging and discharging apparatus is used to perform electric energy dispatch between a grid and a vehicle. Specifically, after the VCU receives the charging and discharging completion information from the BMS, if it is determined that the current electric energy dispatch mode is a two-way electric energy dispatch mode, a procedure of controlling the BMS to exit a charging and discharging mode will not be executed, so that the battery of the vehicle can continue to accept the dispatch of the grid dispatch platform. The charging and discharging process of the vehicle can be rationally controlled during the dispatch process for the two-way electric energy dispatch between the grid and the vehicle, compared with a solution for controlling the BMS to end the charging and discharging procedure upon receiving the charging and discharging completion information.

In order to facilitate the introduction of the electric energy dispatch solution provided by the embodiments of the present application, the embodiments of the present application firstly describe an electric energy dispatch scenario in detail below.

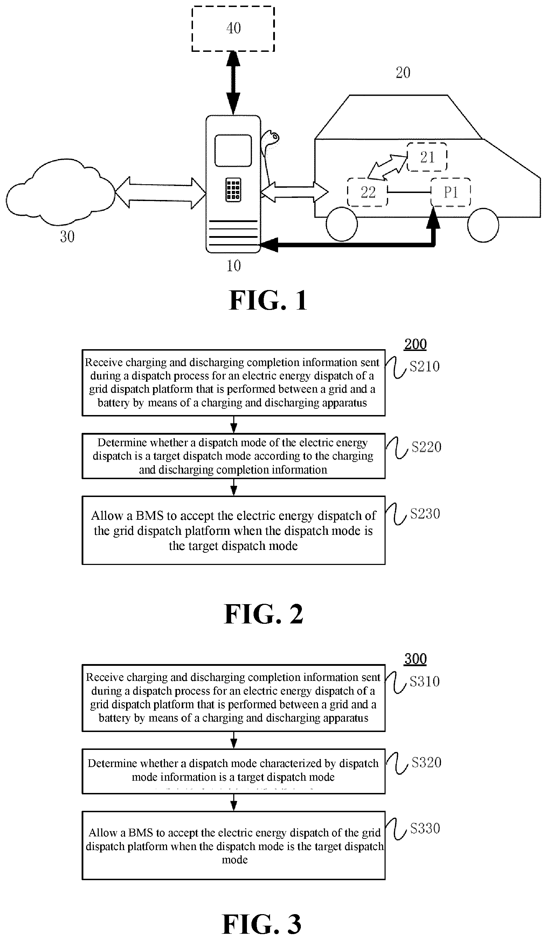

Fig. 1 is a schematic diagram of an exemplary electric energy dispatch scenario provided in an embodiment of the present application. As shown in Fig. 1, a charging and discharging apparatus 10, a vehicle 20, a grid dispatch platform 30, and a grid 40 are involved in the electric energy dispatch scenario. The vehicle 20 includes a battery P1, a battery management system (BMS) 21 and a vehicle control unit (VCU) 22. The hollow arrows in Fig. 1 represent communication interactions, and the solid arrows represent energy interactions.

Specifically, the grid dispatch platform 30 may control the electric energy dispatch process between the grid 40 and the battery P1 by means of the charging and discharging apparatus 10. The charging and discharging apparatus 10 may have a communication interaction with the grid dispatch platform 30. The charging and discharging apparatus 10 may have a communication interaction with the BMS 21, and the BMS 21 may have a communication interaction with the VCU 22. In some embodiments, the communication interactions between the above components may be based on wired communication interaction such as controller area network (CAN) communication, or wireless communication interaction such as Bluetooth and WiFi, which will not be specifically limited.

In a specific scenario, the charging and discharging apparatus 10 may be a charging pile provided in a charging station. Correspondingly, after the vehicle arrives at the charging station, electric energy dispatch between the grid 40 and the battery P1 may be performed depending on the charging pile in the charging station. The charging station may be a fixed place or a place where charging and discharging services can be provided for the vehicle, such as a mobile charging vehicle, which will not be specifically limited.

In another specific scenario, the charging and discharging apparatus 10 may be a portable charging and discharging apparatus such as an on-board charging device. Correspondingly, electric energy dispatch between the battery P1 and the grid 40 may be performed in a place where mains power can be provided or the like. For example, the dispatch of electric energy between the grid 40 and the battery P1 can be performed in places such as private garages and parking lots that can provide live sockets.

After a preliminary understanding of the electric energy dispatch scenario, in order to better understand the present application, the electric energy dispatch method, apparatus, device, and medium according to the embodiments of the present application will be described in detail below with reference to the accompanying drawings. It should be noted that these embodiments are not intended to limit the scope of the disclosure of the present application.

According to some embodiments of the present application, Fig. 2 is a schematic flowchart of an electric energy dispatch method provided in an embodiment of the present application. As shown in Fig. 2, the electric energy dispatch method 200 includes steps S210 to S230. The execution subject of each step of the electric energy dispatch method may be the VCU 22.

In S210, charging and discharging completion information sent by the BMS 21 is received during a dispatch process for an electric energy dispatch of a grid dispatch platform 30 that is performed between a grid 40 and a battery P1 by means of a charging and discharging apparatus 10.

In S220, whether a dispatch mode of the dispatch process is a target dispatch mode is determined according to the charging and discharging completion information.

In S230, the BMS 21 is allowed to accept the electric energy dispatch of the grid dispatch platform 10 when the dispatch mode of the dispatch process is the target dispatch mode.

After the preliminary introduction of the specific steps S210 to S230 of the electric energy dispatch method 200, the technical terms involved in S210 to S230 will be described in detail next.

The charging and discharging apparatus 10 is a charging and discharging apparatus 10 which supports a V2G function. In some embodiments, the charging and discharging apparatus may be provided in a charging station or in other places that can be connected to the grid, such as a parking lot. In some embodiments, the charging and discharging apparatus 10 may include a charging pile, an AC-AC voltage conversion module, an AC-DC voltage conversion module, an on-board charger, and other apparatuses that support a V2G function and can charge and discharge the battery P1, and the specific type thereof is not limited. In some embodiments, when a charging gun of the charging and discharging apparatus 10 is connected to a charging socket on the vehicle 20, the electric energy interaction between the grid 40 and the battery P1 of the vehicle 20 can be realized by means of the charging and discharging apparatus 10.

As for the battery P1, the battery P1 is a battery provided in the vehicle 20. The battery P1 may have an electric energy interaction with the grid 40 by means of the charging and discharging apparatus 10. The battery P1 in the embodiments of the present application may be a lithium-ion battery, a lithium-metal battery, a lead-acid battery, a nickel-cadmium battery, a nickel-metal hydride battery, a lithium-sulfur battery, a lithium-air battery, a sodium-ion battery, or the like, which will not be limited here. In terms of scale, the battery P1 in the embodiments of the present application may be a battery cell, or a battery module or a battery pack, which will not be limited herein. In terms of application scenarios, the battery P1 may be used in the vehicle 20 to supply power to an electric motor of the vehicle 20 as a power source of the vehicle 20. In terms of quantity, there may be one or more batteries P 1, which will not be limited.

The BMS 21 may manage the battery P1. The BMS 21 is provided in the vehicle 20. Specifically, the BMS 21 may be used to monitor voltage data of the battery P1 during the charging and discharging process of the battery P1, and communicate with the charging and discharging apparatus 10 and the VCU 22 respectively. In some embodiments, the BMS 21 may also control the charging and discharging functions of the battery P1. As an example, the BMS 21 may control a relay provided on a power transmission line of the battery P1. In a specific example, after entering the electric energy dispatch procedure, the BMS 21 may control the relay on the power transmission line of the battery P1 to turn on, and after exiting the electric energy dispatch procedure, the BMS 21 may control the relay on the power transmission line of the battery P1 to turn off. The relay on the power transmission line of the battery P1 may include a main positive relay and/or a main negative relay, which will not be specifically limited.

The VCU 22 is provided in the vehicle 20, and may control the BMS 21 to exit the charging and discharging procedure when it is determined that the electric energy dispatch needs to be ended.

The grid dispatch platform 30 may be a device or a functional module capable of controlling the electric energy dispatch process between the grid 40 and the battery P1. In some embodiments, the grid dispatch platform may be integrated in the charging and discharging apparatus 10, or provided in a device having control and communication functions, such as a server, outside the charging and discharging apparatus 10. In some embodiments, the grid dispatch platform 30 may also charge for the electric energy transmission process. The functions of the grid dispatch platform 30 may be set according to actual scenarios and specific requirements, which will not be specifically limited.

For the electric energy dispatch process between the grid 40 and the battery P1, feasible dispatch modes may include a target dispatch mode. The target dispatch mode is a dispatch mode in which two-way electric energy dispatch is performed between the grid 40 and the battery P1 by means of the charging and discharging apparatus 10. Specifically, after the vehicle 20 is electrically connected to the charging and discharging apparatus 10, the grid dispatch platform 30 may flexibly control the battery P1 to discharge to the grid 40 or control the grid 40 to charge the battery P1 according to the grid load and/or the power level of the battery P1.

In some embodiments, the target dispatch mode may include at least one charging phase and one discharging phase. The charging stage is a stage in which electric energy is transmitted from the grid 40 to the battery P1, and the discharging stage is a stage in which electric energy is transmitted from the battery P1 to the grid 40. With the target dispatch mode, it is possible that when the grid 40 is in a high-load state, such as in the peak power consumption period, the electric energy of the battery P1 is supplemented to the grid 40 to perform frequency and peak regulation on the grid 40. Moreover, when the grid 40 is in a low-load state, such as in the low power consumption period, the electric energy of the grid 40 is supplemented to the battery P1 to ensure that the user's power demand for the battery P1 can be met, thereby realizing rational and flexible electric energy dispatch.

In some embodiments, the feasible dispatch modes may also include a first dispatch mode and/or a second dispatch mode. The first dispatch mode is a one-way dispatch mode in which the electric energy of the grid 40 is used to charge the battery P1 by means of the charging and discharging apparatus 10. The second dispatch mode is a one-way dispatch mode in which the electric energy of the battery P1 is transmitted to the grid 40 by means of the charging and discharging apparatus 10. As an example, after the vehicle 20 arrives at a charging station or a charging area, it is possible that part or all of the electric energy of the battery P1 is transmitted to the grid 40 by means of the charging and discharging apparatus 10, or electric energy is acquired from the grid 40 to charge the battery P1 by means of the charging and discharging apparatus 10.

The charging and discharging completion information is used to represent that the BMS 21 determines that the battery P1 has completed charging or discharging. The charging and discharging completion information is sent to the VCU by the BMS 21 when it is determined that a first electrical performance parameter of the battery P1 meets a preset charging and discharging cut-off condition.

The first electrical performance parameter of the battery P1 is a parameter that can reflect a power level of the battery. That is to say, the first electrical performance parameter is a parameter that can change as the power level of the battery P1 changes. Optionally, the first electrical performance parameter may be a state of charge (SOC), a power level of the battery, a voltage value, etc.

The preset charging and discharging cut-off condition includes a preset charging cut-off condition and/or a preset discharging cut-off condition. In some embodiments, under the condition that the first electrical performance parameter is greater than or equal to a first parameter threshold, it may be determined that the first electrical performance parameter meets the preset charging cut-off condition. As an example, when the first electrical performance parameter is the voltage value of the battery P1, the first parameter threshold may be a charging cut-off voltage. The charging cut-off voltage may be a full charge voltage or a first target voltage value. The full charge voltage may be the voltage value of the battery P1 when being fully charged. For example, it is the voltage value of the battery P1 at the SOC of 100%. The first target voltage value may be set according to actual scenarios and specific requirements, which will not be limited. In another embodiment, when the first electrical performance parameter is less than or equal to a second parameter threshold, it may be determined that the first electrical performance parameter meets the preset discharging cut-off condition. As an example, when the first electrical performance parameter is the voltage value of the battery P1, the second parameter threshold may be a preset discharging cut-off voltage. A preset charging cut-off voltage may be a preset full charge voltage or a second target voltage value. A full discharge voltage may be a voltage value of the battery P1 when being discharged to empty. For example, it is the voltage value of the battery P1 at the SOC of 0%. The second target voltage value may be set according to actual scenarios and specific requirements, which will not be limited.

In some embodiments, in order to determine whether the current dispatch process is a two-way dispatch process between the grid and the vehicle, the charging and discharging completion information may also be used to identify the current dispatch mode. For example, the charging and discharging completion information may include dispatch mode information and/or a target identifier.

Regarding S210, in some embodiments, the BMS 21 may determine the dispatch mode of the current electric energy dispatch process through interaction with the charging and discharging apparatus 10. After it is determined that the first electrical performance parameter of the battery meets the preset charging and discharging cut-off condition, the charging and discharging completion information carrying the dispatch mode information of the current electric energy dispatch process is sent to the VCU 22. It should be noted that the current electric energy dispatch process in the embodiments of the present application refers to the electric energy dispatch mode between the grid 40 and the battery P1 when the electric energy dispatch method is executed.

Regarding S230, it should be noted that before receiving the charging and discharging completion information, the VCU 11 allows the BMS 21 to accept the dispatch of the grid dispatch platform 30; and after receiving the charging and discharging completion information, and when the dispatch mode information in the charging and discharging completion information represents that the current grid dispatch mode is the target dispatch mode, the VCU 22 does not change the dispatched state of the BMS 21, that is, the VCU 22 may allow the BMS 21 to continue to accept the dispatch of the grid dispatch platform 30. In some embodiments, if the dispatch mode of the dispatch process is not the target dispatch mode, for example, the dispatch mode of the dispatch process is the first dispatch mode or the second dispatch mode, the VCU 22 may send a charging and discharging end instruction to the BMS 21 to control the BMS 21 to end the electric energy dispatch. Optionally, the charging and discharging end instruction may include a charging end instruction and a discharging end instruction. If the dispatch mode is the first dispatch mode, the VCU 22 may send the charging end instruction to the BMS 21. If the dispatch mode is the second dispatch mode, the VCU 22 may send the discharging end instruction to the BMS 21.

With the electric energy dispatch method 200 illustrated in steps S210 to S230 above, during the electric energy dispatch of the grid dispatch platform that is performed between the grid and the vehicle by means of the charging and discharging apparatus, if the BMS determines that the battery of the vehicle sends the charging and discharging completion information to the VCU, the VCU may determine whether the dispatch mode for the electric energy dispatch is the target dispatch mode for two-way electric energy dispatch between the grid and the vehicle by means of the charging and discharging apparatus according to the charging and discharging completion information. In the target dispatch mode, the VCU allows the BMS to continue to accept the electric energy dispatch of the grid dispatch platform, so that the vehicle can continue to accept the flexible dispatch of the grid dispatch platform. The charging and discharging process of the vehicle can be rationally controlled during the dispatch process for the two-way electric energy dispatch between the grid and the vehicle, compared with a solution for controlling the BMS to end the charging and discharging procedure upon receiving the charging and discharging completion information.

In addition, on the basis of the existing communication protocol, by modifying the electric energy dispatch strategy on the VCU side, the electric energy dispatch method 200 illustrated in steps S210 to S230 above can be implemented without changing the hardware, thereby making the two-way electric energy dispatch process between the grid and the vehicle simple and easy to implement.

According to some embodiments of the present application, optionally, S230 may specifically include:
not sending a charging and discharging end instruction to the BMS 21 when the dispatch mode is the target dispatch mode. That is to say, after receiving the charging and discharging completion information, if it is determined that the current electric energy dispatch process is a two-way electric energy dispatch between the grid 40 and the battery P1, the charging and discharging end instruction will not be sent, so that the BMS 21 is still in the electric energy dispatch procedure.

As the VCU 22 does not send the charging and discharging end instruction, the two-way electric energy dispatch procedure between the grid 40 and the battery P1 can be rationally controlled by only changing a communication strategy on the VCU 22 side, improving the convenience of control.

According to some embodiments of the present application, optionally, Fig. 3 is a schematic flowchart of another electric energy dispatch method provided in an embodiment of the present application. The charging and discharging completion information includes dispatch representation information. As shown in Fig. 3, the electric energy dispatch method 300 includes steps S310 to S330. The execution subject of each step of the electric energy dispatch method may be the VCU 22.

In S310, charging and discharging completion information sent by the BMS 21 is received during a dispatch process for an electric energy dispatch of a grid dispatch platform 30 that is performed between a grid 40 and a battery P1 by means of a charging and discharging apparatus 10. S310 is similar to S210, and for the specific implementation of S310, reference may be made to the above relevant content of S210 in the embodiments of the present application, and details are not repeated here.

In S320, whether a dispatch mode characterized by the dispatch mode information is a target dispatch mode is determined.

The dispatch mode information is used to represent the electric energy dispatch mode between the grid 40 and the battery P1. In some embodiments, the dispatch mode information may represent one of the first dispatch mode, the second dispatch mode, or the target dispatch mode illustrated above. In a specific example, the content of a certain field in the charging and discharging completion information may represent the dispatch mode information. Correspondingly, different dispatch modes correspond to different contents of this field. For example, when the content of this field is 01, it represents the target dispatch mode; when the content of this field is 10, it represents the first dispatch mode; and when the content of this field is 11, it represents the second dispatch mode.

With regard to S320, whether the dispatch mode of the dispatch process for electric energy dispatch is the target dispatch mode may be determined by determining whether the dispatch mode information is the dispatch mode information of the target dispatch mode. Specifically, if the dispatch mode information in the charging and discharging completion information is the dispatch mode information of the target dispatch mode, it is determined that the dispatch mode of the ongoing electric energy dispatch process is the target dispatch mode, that is, a two-way electric energy dispatch between the grid 40 and the battery P1 is in progress.

In S330, the BMS 21 is allowed to accept the electric energy dispatch of the grid dispatch platform 10 when the dispatch mode of the dispatch process is the target dispatch mode. S330 is similar to S230, and for the specific implementation of S330, reference may be made to the above relevant content of S230 in the embodiments of the present application, and details are not repeated here.

With the electric energy dispatch method 300 illustrated in steps S310 to S330 above, the VCU 22 may determine the electric energy dispatch mode from the dispatch mode information in the charging and discharging completion information, and thus may choose whether to control the BMS 21 to end the electric energy dispatch according to the electric energy dispatch mode, so that whether the current electric energy dispatch process is the two-way electric energy dispatch process between the grid 40 and the battery P1 can be accurately identified, thereby facilitating the adoption of different control strategies according to different dispatch processes.

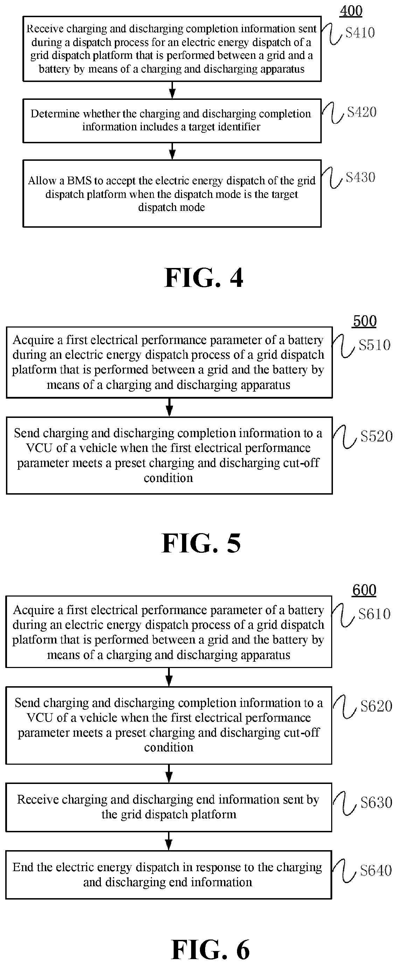

According to some embodiments of the present application, optionally, Fig. 4 is a schematic flowchart of still another electric energy dispatch method provided in an embodiment of the present application. As shown in Fig. 4, the electric energy dispatch method 400 includes steps S410 to S430. The execution subject of each step of the electric energy dispatch method may be the VCU 22.

In S410, charging and discharging completion information sent by the BMS 21 is received during a dispatch process for an electric energy dispatch of a grid dispatch platform 30 that is performed between a grid 40 and a battery P1 by means of a charging and discharging apparatus 10. S410 is similar to S210, and for the specific implementation of S410, reference may be made to the above relevant content of S410 in the embodiments of the present application, and details are not repeated here.

In S420, whether the charging and discharging completion information includes a target identifier is determined.

The target identifier is added to the charging and discharging completion information by the BMS when determining that the dispatch mode is a dispatch mode other than the target dispatch mode. In some embodiments, the other dispatch modes may be the first dispatch mode and the second dispatch mode. That is to say, when the BMS determines that the current dispatch mode is the first dispatch mode or the second dispatch mode, the target identifier is added to the charging and discharging completion information, that is, the generated charging and discharging completion information carries the target identifier. When the BMS determines that the current dispatch mode is the target dispatch mode, the target identifier is not added to the charging and discharging completion information, that is, the generated charging and discharging completion information does not carry the target identifier.

The target identifier is a full charge identifier or a full discharge identifier. Specifically, when the first electrical performance parameter of the battery P1 meets the preset charging cut-off condition, the charging and discharging completion information may include a full charge identifier. When the first electrical performance parameter of the battery P1 meets the preset discharging cut-off condition, the charging and discharging completion information may include a full discharge identifier.

Optionally, two fields in the charging and discharging completion information may be used as a full charge flag and a full discharge flag respectively. Correspondingly, if the full charge flag is assigned a preset value C1, C1 of the full charge flag is the full charge identifier. For example, if the full charge flag is assigned a value of 1, the charging and discharging completion information includes the full charge identifier; and if the full charge flag is assigned a value of 0, the charging and discharging completion information does not include the full charge identifier. Similarly, if the full discharge flag is assigned a preset value C2, C2 of the full discharge flag is the full discharge identifier. In some other embodiments, one field in the charging and discharging completion information may be used as a flag indicating that the battery is fully charged or fully discharged. Correspondingly, when the flag is assigned a preset value D1, D1 of the flag is the full charge identifier. When the flag is assigned a preset value D2, the D2 of the flag is the full discharge identifier. For example, if the flag is assigned a value of 01, the charging and discharging completion information includes a full charge identifier, and if the flag is assigned a value of 11, the charging and discharging completion information includes a full discharge identifier.

Regarding S420, if the charging and discharging completion information includes a full charge identifier or a full discharge identifier, it means that the dispatch mode of the dispatch process is not the target dispatch mode. Similarly, if the charging and discharging completion information does not include the full charge identifier and the full discharge identifier, it means that the dispatch mode of the dispatch process is the target dispatch mode.

In S430, the BMS 21 is allowed to accept the electric energy dispatch of the grid dispatch platform 10 when the dispatch mode of the dispatch process is the target dispatch mode. S430 is similar to S230, and for the specific implementation of S430, reference may be made to the above relevant content of S230 in the embodiments of the present application, and details are not repeated here.

With the electric energy dispatch method 400 illustrated in steps S410 to S430 above, the VCU 22 may determine the electric energy dispatch mode according to whether the charging and discharging completion information includes the target identifier, and thus may choose whether to control the BMS 21 to end the electric energy dispatch according to the electric energy dispatch mode, so that whether the current electric energy dispatch process is the two-way electric energy dispatch process between the grid 40 and the battery P1 can be accurately identified, thereby facilitating the adoption of different control strategies according to different dispatch processes.

According to some embodiments of the present application, based on the same application concept, Fig. 5 is a schematic flowchart of a further electric energy dispatch method provided in an embodiment of the present application. As shown in Fig. 5, the electric energy dispatch method 500 includes steps S510 and S520. The execution subject of each step of the electric energy dispatch method may be the BMS 21.

In S510, a first electrical performance parameter of a battery P1 is acquired during an electric energy dispatch process of a grid dispatch platform 30 that is performed between a grid 40 and the battery P1 by means of a charging and discharging apparatus 10.

In S520, charging and discharging completion information is sent to a vehicle control unit (VCU) 22 of the vehicle when the first electrical performance parameter meets a preset charging and discharging cut-off condition, such that the VCU determines whether a dispatch mode of the electric energy dispatch is a target dispatch mode according to the charging and discharging completion information, and allows the BMS 21 to accept the electric energy dispatch of the grid dispatch platform 30 when the dispatch mode is the target dispatch mode.

It should be noted that for the technical terms and the specific implementations of steps involved in S510 and S520, reference may be made to the relevant descriptions of the electric energy dispatch methods 200-400 of the present application above, and details are not repeated here.

Regarding S540, in some embodiments, the BMS 21 may generate charging and discharging completion information carrying dispatch mode information, and send the generated charging and discharging completion information to the VCU 22. For a specific implementation, reference may be made to the relevant description of S221 in the embodiments of the present application, and details are not repeated here.

In some other embodiments, the BMS 21 may determine whether the current dispatch mode is the target dispatch mode according to the interactive message between the BMS and the charging and discharging apparatus 10, and, when the current dispatch mode is the target dispatch mode, generate charging and discharging completion information carrying no target identifier and send the generated charging and discharging completion information to the VCU 22. For a specific implementation, reference may be made to the relevant description of S222 in the embodiments of the present application, and details are not repeated here.

With the electric energy dispatch method 500 illustrated in steps S510 and S520 above, during the electric energy dispatch of the grid dispatch platform that is performed between the grid and the vehicle by means of the charging and discharging apparatus, the BMS may send the charging and discharging completion information to the VCU of the vehicle when the first electrical performance parameter of the battery meets the preset charging and discharging cut-off condition, and the VCU may determine whether the dispatch mode of the dispatch process is the target dispatch mode for two-way electric energy dispatch between the grid and the vehicle according to the charging and discharging completion information. In the target dispatch mode, the VCU allows the BMS to continue to accept the electric energy dispatch of the grid dispatch platform, so that the vehicle can continue to accept the flexible dispatch of the grid dispatch platform. The charging and discharging process of the vehicle can be rationally controlled during the dispatch process for the two-way electric energy dispatch between the grid and the vehicle, compared with a solution for controlling the BMS to end the charging and discharging procedure upon receiving the charging and discharging completion information.

Other details of the electric energy dispatch method 500 according to the embodiment of the present application are similar to the electric energy dispatch methods 200-400 described above in conjunction with the examples shown in Figs. 2 to 4, and can achieve corresponding technical effects. For the sake of brevity, details will not be repeated here.

According to some embodiments of the present application, optionally, Fig. 6 is a schematic flowchart of a still further electric energy dispatch method provided in an embodiment of the present application. The electric energy dispatch method 600 further includes steps S610 to S640.

In S610, a first electrical performance parameter of a battery P1 is acquired during an electric energy dispatch process of a grid dispatch platform 30 that is performed between a grid 40 and the battery P1 by means of a charging and discharging apparatus 10. S610 is similar to S510, and for the specific implementation of S610, reference may be made to the above relevant content of S510 in the embodiments of the present application, and details are not repeated here.

In 520, charging and discharging completion information is sent to a vehicle control unit (VCU) 22 of the vehicle when the first electrical performance parameter meets a preset charging and discharging cut-off condition, such that the VCU determines whether a dispatch mode of the electric energy dispatch is a target dispatch mode according to the charging and discharging completion information, and allows the BMS 21 to accept the electric energy dispatch of the grid dispatch platform 30 when the dispatch mode is the target dispatch mode. S620 is similar to S520, and for the specific implementation of S620, reference may be made to the above relevant content of S520 in the embodiments of the present application, and details are not repeated here.

In S630, charging and discharging end information sent by the grid dispatch platform 30 is received.

In S640, the electric energy dispatch is ended in response to the charging and discharging end information sent by the VCU 22.

The charging and discharging end information is used to prompt the BMS 21 to end the electric energy dispatch. Specifically, the charging and discharging end information may be sent by the grid dispatch platform 30 after determining that the current dispatch process can be ended. Specifically, the grid dispatch platform 30 may send the charging and discharging end information to the charging and discharging apparatus 10, and the charging and discharging apparatus 10 sends the received charging and discharging end information to the BMS 21.

As for the specific transmission path of the charging and discharging information, in some embodiments, the grid dispatch platform 30 may send the charging and discharging end information to the BMS 21 by means of the charging and discharging apparatus 10. That is to say, the grid dispatch platform 30 sends the charging and discharging completion information to the charging and discharging apparatus 10, and the charging and discharging apparatus 10 forwards the charging and discharging completion information to the BMS 21. In some other embodiments, the grid dispatch platform 30 may send the charging and discharging end information to an Internet of Vehicles device such as a telematics box (TBOX) or RDB (a type of Internet of Vehicles device). It should be noted that the grid dispatch platform 30 may also directly or indirectly send the charging and discharging end information to the BMS 21 in other ways, and the specific transmission path of the charging and discharging end information is not limited.

Regarding S640, it should be noted that after the BMS 21 ends the electric energy dispatch, the vehicle 20 may exit the electric energy dispatch procedure.

With the electric energy dispatch method 600 illustrated in steps S610 to S650, the two-way dispatch mode between the grid 40 and the battery P1 can be ended under the control of the grid dispatch platform 30, improving the rationality of the two-way dispatch.

According to some embodiments of the present application, optionally, the charging and discharging end information is sent to the BMS by the grid dispatch platform when it is determined that an electric energy dispatch parameter acquired in real time meets a target dispatch condition.

The electric energy dispatch parameter includes: a dispatch time parameter and/or a second electrical performance parameter of the battery P1. Specifically, when the electric energy dispatch parameter includes the dispatch time parameter, the target dispatch condition consists in that the dispatch time parameter acquired in real time reaches a target dispatch time parameter.

When the electric energy dispatch parameter includes the second electrical performance parameter, the target dispatch condition consists in that the second electrical performance parameter acquired in real time reaches a target electrical performance parameter.

Regarding the target dispatch time parameter and the target electrical performance parameter, in terms of their acquisition methods, in some embodiments, they may be input by a user on a device with an information input function such as a charging pile and an on-board terminal. Correspondingly, when receiving the target dispatch time parameter and/or the target electrical performance parameter input by the user, the device with the information input function sends the target dispatch time parameter and/or the target electrical performance parameter received to the grid dispatch platform 30. Alternatively, the user may directly input the target dispatch time parameter and/or the target electrical performance parameter on a relevant application (APP), a relevant program, or a relevant operation webpage of the grid dispatch platform 30. The related application (APP) and the related program may be provided in a device such as a mobile phone, a tablet, a computer, and a charging pile. Optionally, the user may also input the selected electric energy dispatch mode on the device with the information input function. For example, the user may select a target dispatch mode from a plurality of optional dispatch modes. In some other embodiments, the target dispatch time parameter and the target electrical performance parameter may be set by default. For example, if the target electrical performance parameter is SOC, it may be set to 100% by default. Alternatively, it may also be set to other values by default, which will not be limited.

Specifically, the target dispatch time parameter may be a specific time value or a duration. In an embodiment, if the target dispatch time parameter is a time value, it may be a time value at which the user wishes to end the electric energy dispatch, for example, the user sets such that the electric energy dispatch is ended at 19:30:30. Alternatively, it may be a time value at which the user wishes to end the charging and discharging of the battery P1. In another embodiment, if the target dispatch time parameter is a duration, it may be a dispatched duration desired by the user. For example, it is 4h and so on.

The target electrical performance parameter may be a target SOC, a target voltage value, a target power level, etc. In some embodiments, the target SOC may be a target value that the SOC of the battery needs to reach when the electric energy dispatch is ended. Optionally, the target SOC may be a value input by the user, or a default value, or the sum of the SOC of the battery at the start of electric energy dispatch and a target SOC variation input by the user. As an example, if the SOC of the battery P1 before the electric energy dispatch starts is 20%, and the user wishes to charge 50% of the SOC (that is, the target SOC variation input by the user is 50%), then the target SOC may be 70%. As another example, if the SOC of the battery P1 before the electric energy dispatch starts is 100%, and the user wishes to sell 50% of the SOC (that is, the target SOC variation input by the user is -50%), then the target SOC may be 50%.

The dispatch time parameter, in some embodiments, may be a specific time value or a duration of the dispatch process. In some embodiments, the grid dispatch platform 30 may acquire the dispatch time parameter at preset intervals or irregularly.

The second battery performance parameter of the battery P1 may be a parameter that can reflect a power level of the battery. That is to say, the second electrical performance parameter is a parameter that can change as the power level of the battery P1 changes. Optionally, the second electrical performance parameter may be SOC, a power level of the battery, a voltage value, etc. It should be noted that the second electrical performance parameter and the first electrical performance parameter may be the same type of parameter, for example, both are SOC. Alternatively, they may be different kinds of parameters. For example, the first electrical performance parameter is the battery voltage, and the second electrical performance parameter is the SOC, which will not be limited.

As an example, after the vehicle arrives at the charging station, the user inputs a target time and a target SOC. Before the target time, the grid dispatch platform 30 may flexibly dispatch the electric energy between the grid and the battery of the vehicle according to parameters such as grid conditions and the power level of the battery, and make the power level of the battery of the vehicle reach the target SOC before the target time. As an example, if the user inputs a target time of 20:30 and a target SOC of 80%, then the SOC of the battery of the vehicle can reach 80% by charging or discharging near 20:30.

With this embodiment, the grid dispatch platform 30 may acquire the electric energy dispatch parameter in real time, and send the charging and discharging end information to the VCU 22 to prompt same to end the electric energy dispatch when the electric energy dispatch parameter meets the target dispatch condition. Since the electric energy dispatch parameter can reflect the real-time electric energy dispatch state, the grid dispatch platform 30 accurately controls the electric energy dispatch process according to the electric energy dispatch state.

With this embodiment, the grid dispatch platform 30 may acquire the electric energy dispatch parameter in real time, and send the charging and discharging end information to the VCU 22 to prompt same to end the electric energy dispatch when the electric energy dispatch parameter meets the target dispatch condition. Since the electric energy dispatch parameter can reflect the real-time electric energy dispatch state, the grid dispatch platform 30 accurately controls the electric energy dispatch process according to the electric energy dispatch state.

According to some embodiments of the present application, optionally, the VCU 22 does not respond to the charging and discharging completion information when the dispatch mode is the target dispatch mode.

As the VCU 22 does not send the charging and discharging end instruction, the two-way electric energy dispatch procedure between the grid 40 and the battery P1 can be rationally controlled by only changing a communication strategy on the VCU 22 side, improving the convenience of control.

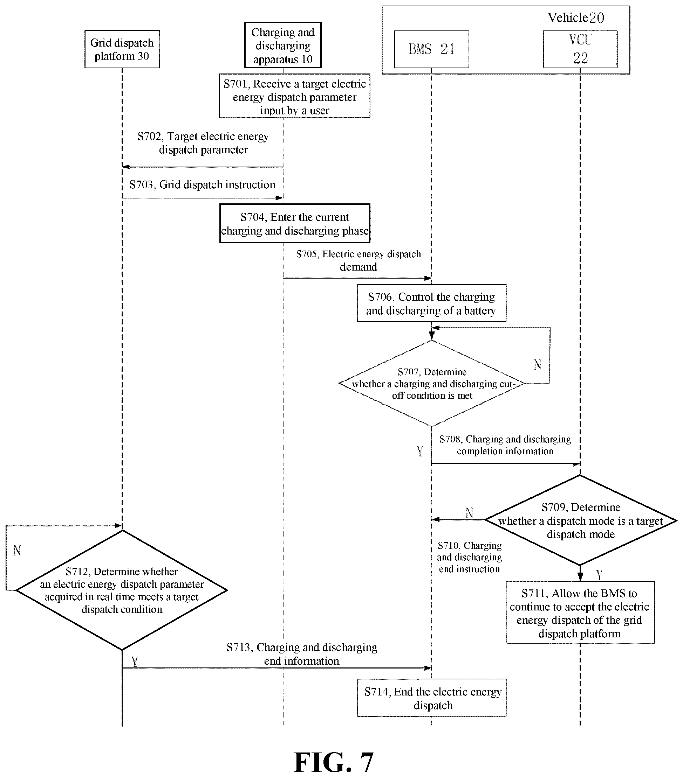

After the preliminary introduction of the electric energy dispatch solutions provided in the embodiments of the present application through the electric energy dispatch methods 200-600 shown in Figs. 2-6, in order to fully understand the electric energy dispatch solutions provided in the embodiment of the present application, Fig. 7 is a schematic flowchart of an exemplary electric energy dispatch method provided in an embodiment of the present application.

As shown in Fig. 7, the electric energy dispatch method 700 involves a charging and discharging apparatus 10, a battery management system (BMS) 21 of a vehicle 20, a vehicle control unit (VCU) 22 of the vehicle 20 and a grid dispatch platform 30.

Specifically, an electric energy dispatch solution includes steps S701 to S714.

In S701, the charging and discharging apparatus 10 receives a target electric energy dispatch parameter input by a user.

In S702, the charging and discharging apparatus 10 sends the target electric energy dispatch parameter to the grid dispatch platform 30.

In S703, the grid dispatch platform 30 sends a grid dispatch instruction to the charging and discharging apparatus 10 after receiving the target electric energy dispatch parameter.

In S704, the charging and discharging apparatus 10 enters the current charging and discharging phase instructed by the grid dispatch instruction, in response to the grid dispatch instruction.

In S705, the charging and discharging apparatus 10 sends an electric energy dispatch demand of the current charging and discharging stage to the BMS 21.

In S706, the BMS 21 controls the charging and discharging of the battery P1 according to the electric energy dispatch demand.

In S707, during an electric energy dispatch process, the BMS 21 determines whether a second electrical performance parameter acquired in real time meets a preset charging and discharging cut-off condition. If the determination result is that the preset charging and discharging cut-off condition is not met, the second electrical performance parameter continues to be acquired in real time while determining whether the preset charging and discharging cut-off condition is met. If the determination result is yes, continue to execute S708.

In S708, when the BMS 21 determines that the second electrical performance parameter acquired in real time meets the preset charging and discharging cut-off condition, charging and discharging completion information is sent to the VCU 22.

In S709, the VCU 22 determines whether a dispatch mode of the dispatch process is a target dispatch mode according to the charging and discharging completion information. If the determination result is no, continue to execute S710, and if the determination result is yes, continue to execute S711.

In S710, when the dispatch mode of the dispatch process is not the target dispatch mode, the VCU 22 sends a charging and discharging end instruction to the BMS 21.

In S711, when the dispatch mode of the dispatch process is the target dispatch mode, the VCU 22 allows the BMS 21 to continue to accept the electric energy dispatch of the grid dispatch platform 30.

In S712, the grid dispatch platform 30 determines whether the electric energy dispatch parameter acquired in real time meets a target dispatch condition. If the determination result is that the target dispatch condition is not met, the electric energy dispatch parameter continues to be acquired while determining whether the continuously acquired electric energy dispatch parameter meets the target dispatch condition. If the determination result is that the target dispatch condition is met, continue to execute S713.

In S713, the grid dispatch platform 30 sends charging and discharging end information to the BMS 21 whether the electric energy dispatch parameter acquired in real time meets the target dispatch condition.

In S714, the BMS 21 ends the electric energy dispatch in response to the charging and discharging end information.

After the preliminary introduction of the specific steps S701 to S714 of the electric energy dispatch method 700, the technical terms involved in S701 to S714 will be described in detail next.

The target electric energy dispatch parameter may include a target dispatch mode input by the user. In some embodiments, the target electric energy dispatch parameter may include a target dispatch time parameter and/or a target electrical performance parameter input by the user. For the specific contents of the target dispatch mode, the target dispatch time parameter, and the target electrical performance parameter, reference may be made to the above relevant descriptions in the embodiments of the present application, and details are not repeated here.

As for the grid dispatch instruction, since the target dispatch mode may include at least one charging phase and at least one discharging phase, the grid dispatch instruction is used to control the charging and discharging apparatus 10 and the BMS 21 to enter the corresponding charging and discharging phase in the dispatch procedure corresponding to the target dispatch mode. Specifically, the grid dispatch instruction includes: a first grid dispatch instruction for instructing the charging and discharging apparatus 10 and the BMS 21 to enter the charging phase, and/or a second grid dispatch instruction for instructing the charging and discharging apparatus 10 and the BMS 21 to enter the discharging phase. In some embodiments, the grid dispatch platform 30 may send the first grid dispatch instruction or the second grid dispatch instruction to the charging and discharging apparatus 10 according to the grid load and/or the power level of the battery P1.

Optionally, the grid dispatch instruction may include a charging and discharging direction of the current charging and discharging phase and a power demand for transmitting electric energy in the current charging and discharging phase. The charging and discharging direction is an electric energy transmission direction. If the calculated charging and discharging direction is the electric energy transmission direction from the battery of the vehicle to the grid, that is, when the battery of the vehicle is being discharged, the current charging and discharging stage is the discharging stage. Similarly, if the charging and discharging direction is the electric energy transmission direction from the grid to the battery of the vehicle, that is, when the battery of the vehicle is being charged, the current charging and discharging stage is the charging stage. In an embodiment, the grid dispatch platform 30 may calculate the charging and discharging direction and the power demand according to the grid load and/or the power level of the battery, etc.

Optionally, the grid dispatch instruction may also include a charging and discharging depth of the current charging and discharging stage. For the charging stage, the charging depth represents the ratio of a power level to be charged of the battery in this charging stage to the rated power level of the battery. For the discharging stage, the discharging depth represents the ratio of a power level to be discharged of the battery in this charging stage to the rated power level of the battery.

The grid dispatch demand may include a charging and discharging direction of the current charging and discharging phase and a power demand for transmitting electric energy in the current charging and discharging phase. Optionally, the grid dispatch demand may also include data, such as a charging and discharging depth in the current charging and discharging stage, that can be used by the BMS 21 to determine the charging and discharging parameters of the battery in this charging and discharging stage.

Regarding S701 and S702, in another implementation, the target electric energy dispatch parameter may also be input on a relevant APP or a relevant web page of the grid dispatch platform.

Regarding S703, as a specific example, if the grid dispatch platform 30 determines that it is necessary to control the battery to transmit power to the grid when the grid is in a high-load state, an electric energy dispatch instruction may be sent to the charging and discharging apparatus 10 to instruct same to enter the discharging phase. After a period of time, if the grid is in a low-load state, the grid dispatch platform 30 determines that the grid will transmit power to the battery, and at this time, an electric energy dispatch instruction may be sent to the charging and discharging apparatus 10 to instruct same to enter the charging phase.

Regarding S706, in some embodiments, the BMS 21 may monitor the voltage of the battery P1 during charging and discharging. Moreover, after it is determined that a stopping condition of the target dispatch mode is met, the electric energy dispatch procedure is exited. In some other embodiments, the BMS 21 may determine the charging and discharging mode and charging and discharging demand parameters according to the electric energy dispatch demand, and send the charging and discharging mode and the charging and discharging parameters to the charging and discharging apparatus 10, such that the charging and discharging apparatus 10 adjusts a charging and discharging voltage and/or a charging and discharging current according to the charging and discharging mode and the charging and discharging parameters during the charging and discharging, to ensure the normal development of the charging and discharging process. In an embodiment, the charging and discharging demand parameters may include a voltage demand value, a current demand value, etc. The charging and discharging mode may include a constant-current charging mode, a constant-current discharging mode, a constant-voltage charging mode or a constant-voltage discharging mode. Correspondingly, when the charging and discharging mode of the charging and discharging apparatus 10 is the constant-current charging mode, the output current is controlled not to exceed a current demand value. Moreover, when the charging and discharging mode is the constant-current discharging mode, the input current is controlled not to exceed a current demand value. Moreover, when the charging and discharging mode is the constant-voltage charging mode, the output voltage is controlled not to exceed a voltage demand value. Moreover, when the charging and discharging mode is the constant-voltage discharging mode, the input voltage is controlled not to exceed a voltage demand value.

In an example, the BMS 21 may transmit the voltage demand value, the current demand value, and the charging and discharging mode through a battery charging demand message (such as a BCL message).

Based on the same application concept, the embodiments of the present application further provide a corresponding vehicle control unit (VCU) in addition to the electric energy dispatch method 200-400 described in conjunction with any optional embodiment shown in Figs. 2-4.

The VCU according to the embodiments of the present application will be described in detail below with reference to the accompanying drawings.

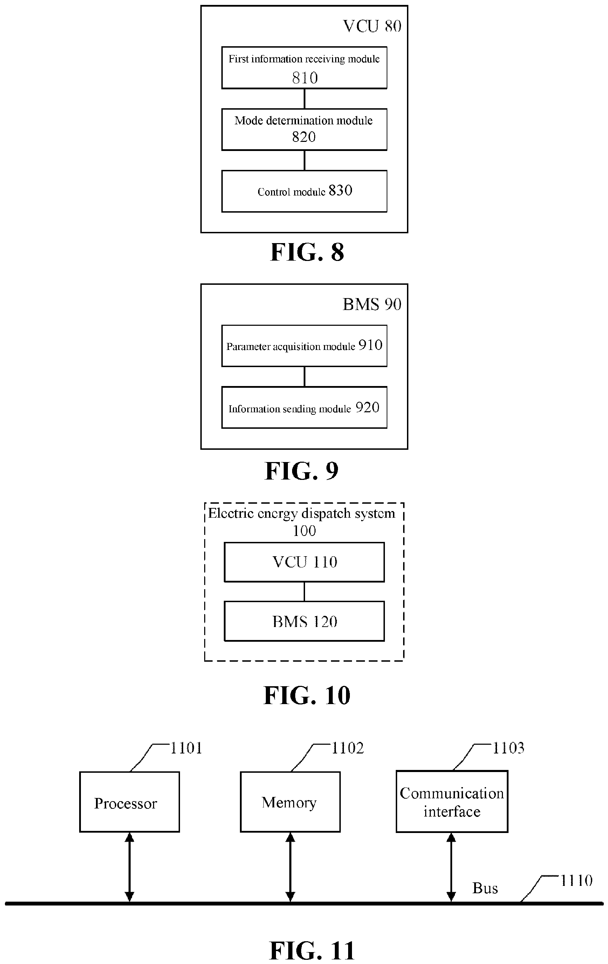

Fig. 8 is a structural schematic diagram of a vehicle control unit (VCU) provided in an embodiment of the present application. As shown in Fig. 8, the VCU 80 includes:
a first information receiving module 810 for receiving charging and discharging completion information sent by a battery management system (BMS) during a dispatch process for an electric energy dispatch of a grid dispatch platform that is performed between a grid and a battery of the vehicle by means of a charging and discharging apparatus. The charging and discharging completion information is sent by the BMS when a first electrical performance parameter of the battery meets a preset charging and discharging cut-off condition.

A mode determination module 820 is configured for determining whether a dispatch mode of the dispatch process is a target dispatch mode according to the charging and discharging completion information. The target dispatch mode is a two-way electric energy dispatch mode between the grid and the battery.

A control module 830 is configured for allowing the BMS to accept the electric energy dispatch of the grid dispatch platform when the dispatch mode is the target dispatch mode.

With the VCU 80 illustrated with reference to Fig. 8, during the electric energy dispatch of the grid dispatch platform that is performed between the grid and the vehicle by means of the charging and discharging apparatus, if the BMS determines that the battery of the vehicle sends the charging and discharging completion information to the VCU, the VCU may determine whether the dispatch mode for the electric energy dispatch is the target dispatch mode for two-way electric energy dispatch between the grid and the vehicle by means of the charging and discharging apparatus according to the charging and discharging completion information. In the target dispatch mode, the VCU allows the BMS to continue to accept the electric energy dispatch of the grid dispatch platform, so that the vehicle can continue to accept the flexible dispatch of the grid dispatch platform. The charging and discharging process of the vehicle can be rationally controlled during the dispatch process for the two-way electric energy dispatch between the grid and the vehicle, compared with a solution for controlling the BMS to end the charging and discharging procedure upon receiving the charging and discharging completion information.

In addition, on the basis of the existing communication protocol, by modifying the electric energy dispatch strategy on the VCU side, the VCU 80 described above can be implemented without changing the hardware, thereby making the two-way electric energy dispatch process between the grid and the vehicle simple and easy to implement.

According to some embodiments of the present application, optionally, the mode determination module 820 specifically includes:
a second information receiving module for receiving charging and discharging end information sent by the grid dispatch platform.

An instruction sending module sends a charging and discharging end instruction to the BMS in response to the charging and discharging end information, such that the BMS ends the electric energy dispatch.

With the VCU 80 illustrated in this embodiment, the two-way dispatch mode between the grid and the battery can be ended under the control of the grid dispatch platform, improving the rationality of the two-way dispatch.

According to some embodiments of the present application, optionally, the charging and discharging end information is sent by the grid dispatch platform when it is determined that an electric energy dispatch parameter acquired in real time meets a target dispatch condition.

The electric energy dispatch parameter includes: a dispatch time parameter and/or a second electrical performance parameter of the battery. Specifically, when the electric energy dispatch parameter includes the dispatch time parameter, the target dispatch condition consists in that the dispatch time parameter acquired in real time reaches a target dispatch time parameter.

When the electric energy dispatch parameter includes the second electrical performance parameter, the target dispatch condition consists in that the second electrical performance parameter acquired in real time reaches a target electrical performance parameter.

With this embodiment, the grid dispatch platform may acquire the electric energy dispatch parameter in real time, and send the charging and discharging end information to the VCU 80 to prompt same to end the electric energy dispatch when the electric energy dispatch parameter meets the target dispatch condition. Since the electric energy dispatch parameter can reflect the real-time electric energy dispatch state, the grid dispatch platform accurately controls the electric energy dispatch process according to the electric energy dispatch state.

According to some embodiments of the present application, optionally, the control module 830 is specifically configured for:
not sending a charging and discharging end instruction to the BMS when the dispatch mode is the target dispatch mode.

As the VCU 80 does not send the charging and discharging end instruction, the two-way electric energy dispatch procedure between the grid and the battery can be rationally controlled by only changing a communication strategy on the VCU 80 side, improving the convenience of control.

Other details of the VCU 80 according to the embodiment of the present application are similar to the electric energy dispatch method 200 described above in conjunction with the examples shown in Figs. 2 to 4, and can achieve corresponding technical effects. For the sake of brevity, details will not be repeated here.

Based on the same application concept, the embodiments of the present application further provide a corresponding vehicle control unit (BMS) in addition to the electric energy dispatch method 500-600 described in conjunction with any optional embodiment shown in Figs. 5 and 6.

The BMS according to the embodiments of the present application will be described in detail below with reference to the accompanying drawings.

Fig. 9 is a structural schematic diagram of a vehicle control unit (BMS) provided in an embodiment of the present application. As shown in Fig. 9, the BMS 90 includes:
a parameter acquisition module 910 for acquiring a first electrical performance parameter of a battery of the vehicle during an electric energy dispatch of a grid dispatch platform that is performed between a grid and the battery by means of a charging and discharging apparatus; and
an information sending module 920 for sending charging and discharging completion information to a vehicle control unit (VCU) of the vehicle when the first electrical performance parameter meets a preset charging and discharging cut-off condition, such that the VCU determines whether a dispatch mode of the electric energy dispatch is a target dispatch mode according to the dispatch mode information in the charging and discharging completion information, and allows the BMS to accept the electric energy dispatch of the grid dispatch platform when the dispatch mode is the target dispatch mode.

With the BMS 90 illustrated with reference to Fig. 9, during the electric energy dispatch of the grid dispatch platform that is performed between the grid and the vehicle by means of the charging and discharging apparatus, if the BMS determines that the battery of the vehicle sends the charging and discharging completion information to the VCU, the VCU may determine whether the dispatch mode for the electric energy dispatch is the target dispatch mode for two-way electric energy dispatch between the grid and the vehicle by means of the charging and discharging apparatus according to the charging and discharging completion information. In the target dispatch mode, the VCU allows the BMS to continue to accept the electric energy dispatch of the grid dispatch platform, so that the vehicle can continue to accept the flexible dispatch of the grid dispatch platform. The charging and discharging process of the vehicle can be rationally controlled during the dispatch process for the two-way electric energy dispatch between the grid and the vehicle, compared with a solution for controlling the BMS to end the charging and discharging procedure upon receiving the charging and discharging completion information.

According to some embodiments of the present application, optionally, the BMS2 further includes an information receiving module, an information sending module and a control module.

The information receiving module is configured for receiving charging and discharging end information sent by the grid dispatch platform.

The information sending module is configured for sending the charging and discharging end information to the VCU, such that the VCU sends a charging and discharging end instruction to the BMS 90 in response to the charging and discharging end information.

The control module is configured for ending the electric energy dispatch in response to the charging and discharging end instruction sent by the VCU.

With this embodiment, the two-way dispatch mode between the grid and the battery can be ended under the control of the grid dispatch platform, improving the rationality of the two-way dispatch.

According to some embodiments of the present application, optionally, the charging and discharging end information is sent by the grid dispatch platform to the VCU through the BMS during the electric energy dispatch process when it is determined that a time parameter acquired in real time reaches a dispatch time parameter and/or a second electrical performance parameter of the battery reaches a target electrical performance parameter.

With this embodiment, the grid dispatch platform may acquire the electric energy dispatch parameter in real time, and send the charging and discharging end information to the VCU to prompt same to end the electric energy dispatch when the electric energy dispatch parameter meets the target dispatch condition. Since the electric energy dispatch parameter can reflect the real-time electric energy dispatch state, the grid dispatch platform accurately controls the electric energy dispatch process according to the electric energy dispatch state.

According to some embodiments of the present application, optionally, the VCU does not respond to the charging and discharging completion information when the dispatch mode is the target dispatch mode.

As the VCU does not send the charging and discharging end instruction, the two-way electric energy dispatch procedure between the grid and the battery can be rationally controlled by only changing a communication strategy on the VCU side, improving the convenience of control.

Other details of the BMS 90 according to the embodiment of the present application are similar to the electric energy dispatch methods 500-600 described above in conjunction with the examples shown in Figs. 5 and 6, and can achieve corresponding technical effects. For the sake of brevity, details will not be repeated here.

Based on the same application concept, the embodiments of the present application further provide a corresponding grid dispatch system in addition to the BMS 90 and the VCU 80.

The grid dispatch system according to the embodiments of the present application will be described in detail below with reference to the accompanying drawings.

Fig. 10 is a structural schematic diagram of a grid dispatch system provided in an embodiment of the present application. As shown in Fig. 10, the grid dispatch system 100 includes:
a battery management system (BMS) 120 and a vehicle control unit (VCU) 110. For the specific content of the VCU 110, reference may be made to the above relevant description of the VCU 80 in the embodiments of the present application, and for the specific content of the BMS 120, reference may be made to the above relevant description of the BMS 90 in the embodiments of the present application.

Optionally, the grid dispatch system 100 may further include a charging and discharging apparatus.

Optionally, the grid dispatch system 100 may further include a grid dispatch platform.

For the specific content of each component module or apparatus of the grid dispatch system 100, reference may be made to the above relevant contents in the embodiments of the present application, and details are not repeated here.

Other details of the grid dispatch system according to the embodiment of the present application are similar to the BMS 90 and the VCU 80 described above in conjunction with the examples shown in Figs. 8 and 9, and can achieve corresponding technical effects. For the sake of brevity, details will not be repeated here.

Fig. 11 shows a schematic diagram of a hardware structure of an electric energy dispatch device provided in an embodiment of the present application.

The electric energy dispatch device may include a processor 1101 and a memory 1102 in which computer program instructions are stored.

Specifically, the processor 1101 may include a central processing unit (CPU), or an application specific integrated circuit (ASIC), or one or more integrated circuits that can be configured to implement one or more of the embodiments of the present application.

The memory 1102 may include a mass memory for data or instructions. By way of example and non-restrictively, the memory 1102 may include a hard disk drive (HDD), a floppy disk drive, a flash memory, an optical disk, a magneto-optical disk, a magnetic tape, or a universal serial bus (USB) drive, or a combination of two or more of the above. In some examples, the memory 1102 may include a removable or non-removable (or fixed) medium, or the memory 1102 may be a non-volatile solid-state memory. In some embodiments, the memory 1102 may be inside or outside the electric energy dispatch device.

In some examples, the memory 1102 may be a read only memory (ROM). In an example, the ROM may be a mask programmed ROM, a programmable ROM (PROM), an erasable PROM (EPROM), an electrically erasable PROM (EEPROM), an electrically alterable ROM (EAROM), or a flash memory, or a combination of two or more of the above.

The memory 1102 may include a read only memory (ROM), a random access memory (RAM), a disk storage medium device, an optical storage medium device, a flash memory device, or an electrical, optical or other physical/tangible memory device. Therefore, in general, the memory includes one or more tangible (non-transitory) computer readable storage mediums (e.g., memory devices) encoded with software including computer-executable instructions, and the software, when executed (e.g., by one or more processors), is operable to perform the operations described with reference to the method according to an aspect of the present disclosure.

The processor 1101 reads and executes the computer program instructions stored in the memory 1102 to implement the electric energy dispatch method 200-400 in the embodiments shown in Figs. 2-4 and achieve the corresponding technical effects achieved by executing the method in any example shown in any one of Figs. 2-4, or to implement the electric energy dispatch method 500-600 in the embodiments shown in Figs. 5 and 6 and achieve the corresponding technical effects achieved by executing the method in any example shown in any one of Figs. 5 and 6. For the sake of brevity, details will not be repeated here.

In an example, the electric energy dispatch device may further include a communication interface 1103 and a bus 1110. As shown in Fig. 11, the processor 1101, the memory 1102, and the communication interface 1103 are connected to one another and complete communication with one another through the bus 1110.

The communication interface 1103 is mainly configured to implement communication between the modules, apparatuses, units, and/or devices in the embodiments of the present application.

The bus 1110 includes hardware, software, or both, and couples the components of the electric energy dispatch device to each other. By way of example and non-restrictively, the bus may include an accelerated graphics port (AGP) or other graphics buses, an extended industry standard architecture (EISA) bus, a front side bus (FSB), a hyper transport (HT) interconnect, an industry standard architecture (ISA) bus, an InfiniBand Interconnect, a low pin count (LPC) bus, a memory bus, a microchannel architecture (MCA) bus, a peripheral component interconnect (PCI) bus, a PCI-Express (PCI-X) bus, a serial advanced technology attachment (SATA) bus, a Video Electronics Standards Association local (VLB) bus, or other suitable buses, or a combination of two or more of the above. The bus 1110 may include one or more buses, where appropriate. While the embodiments in the present application describe and illustrate a particular bus, any suitable bus or interconnect are contemplated.

The electric energy dispatch device may execute an electric energy dispatch method in the embodiments of the present application, thereby implementing the electric energy dispatch method and apparatus described with reference to Figs. 2 and 9.

In addition, in combination with the electric energy dispatch method in the foregoing embodiments, the embodiments of the present application may provide a computer storage medium for implementation. Computer program instructions are stored in the computer storage medium, and the computer program instructions, when executed by a processor, implement an electric energy dispatch method in any one of the foregoing embodiments.

It should be note that the present application is not limited to the specific configurations and processes described above and shown in the figures. For the sake of brevity, detailed descriptions of known methods are omitted here. In the above embodiments, several specific steps are described and shown as examples. However, the methods and processes of the present application are not limited to the specific steps that are described and shown, and those skilled in the art may make various alterations, modifications, and additions, or change the order between the steps after comprehending the spirit of the present application.

The functional blocks shown in the above structural block diagrams may be implemented as hardware, software, firmware, or a combination thereof. When the functional blocks are implemented as hardware, the hardware may be, for example, an electronic circuit, an application specific integrated circuit (ASIC), appropriate firmware, a plug-in, or a function card. When the functional blocks are implemented as software, elements of the present application are programs or code segments for executing desired tasks. The programs or code segments may be stored in a machine-readable medium or transmitted over a dispatch medium or a communication link through a data signal carried in a carrier wave. By "machine-readable medium" may include any medium that can store or dispatch information. Examples of the machine-readable medium include an electronic circuit, a semiconductor memory device, a ROM, a flash memory, an erasable ROM (EROM), a floppy disk, a CD-ROM, an optical disk, a hard disk, an optic fiber medium, a radio frequency (RF) link, etc. The code segments may be downloaded via a computer network such as the Internet or an intranet.

It should also be noted that the exemplary embodiments mentioned in the present application describe some methods or systems based on a series of steps or apparatuses. However, the present application is not limited to the order of the above steps, i.e., the steps may be executed in the order mentioned in the embodiments or in an order different from the order in the embodiments, or several steps may be executed concurrently.

Aspects of the present disclosure are described above with reference to flowcharts and/or block diagrams of methods, apparatuses, devices, and computer program products according to the embodiments of the present disclosure. It will be understood that each block of the flowcharts and/or block diagrams, and a combination of blocks in the flowcharts and/or block diagrams, may be implemented by computer program instructions. These computer program instructions may be provided to a processor of a general purpose computer, a special purpose computer, or other programmable data processing apparatuses to produce a machine such that execution of these instructions by the processor of the computer or other programmable data processing apparatuses enables the implementation of the functions/actions specified in one or more blocks of the flowcharts and/or block diagrams. Such processors may be, but are not limited to, general purpose processors, special purpose processors, application specific processors, or field programmable logic circuits. It can also be understood that each block in the block diagrams and/or flowcharts and a combination of blocks in the block diagrams and/or flowcharts may also be implemented by dedicated hardware for performing specified functions or actions, or may be implemented by a combination of dedicated hardware and computer instructions.

Only specific implementations of the present application are provided above. Those skilled in the art would have clearly understood that for convenience and conciseness of description, the specific working processes of the above-described systems, modules and units can refer to the corresponding processes in the above-described embodiments of the method and will not be further described here. It should be understood that the scope of protection of the present application is not limited thereto. Various equivalent modifications or substitutions could be readily figured out by those skilled in the art within the technical scope disclosed in the present application, and the modifications or substitutions shall fall within the scope of protection of the present application.

## Claims

1. An electric energy dispatch method applied to a vehicle control unit (VCU) of a vehicle, the method comprising:
receiving charging and discharging completion information sent by a battery management system (BMS) during a dispatch process for an electric energy dispatch of a grid dispatch platform that is performed between a grid and a battery of the vehicle by means of a charging and discharging apparatus, the charging and discharging completion information being sent by the BMS when a first electrical performance parameter of the battery meets a preset charging and discharging cut-off condition;
determining whether a dispatch mode of the dispatch process is a target dispatch mode according to the charging and discharging completion information, the target dispatch mode being a two-way electric energy dispatch mode between the grid and the battery; and
allowing the BMS to accept the electric energy dispatch of the grid dispatch platform when the dispatch mode is the target dispatch mode.

2. The method according to claim 1, wherein the charging and discharging completion information comprises dispatch representation information, and the determining of whether a dispatch mode of the dispatch process is a target dispatch mode according to the charging and discharging completion information comprises:
determining whether a dispatch mode **characterized by** the dispatch mode information is a target dispatch mode.

3. The method according to claim 1, wherein the determining of whether a dispatch mode of the dispatch process is a target dispatch mode according to the charging and discharging completion information comprises:
determining whether the charging and discharging completion information comprises a target identifier, wherein the target identifier is added to the charging and discharging completion information by the BMS when determining that the dispatch mode is a dispatch mode other than the target dispatch mode, and the target identifier is a full charge identifier or a full discharge identifier.

4. The method according to any one of claims 1-3, wherein
the allowing the BMS to accept the electric energy dispatch of the grid dispatch platform when the dispatch mode is the target dispatch mode specifically comprises:
not sending a charging and discharging end instruction to the BMS when the dispatch mode is the target dispatch mode.

5. An electric energy dispatch method applied to a battery management system (BMS) of a vehicle, the method comprising:
acquiring a first electrical performance parameter of a battery of the vehicle during a dispatch process for an electric energy dispatch of a grid dispatch platform that is performed between a grid and the battery by means of a charging and discharging apparatus; and
sending charging and discharging completion information to a vehicle control unit (VCU) of the vehicle when the first electrical performance parameter meets a preset charging and discharging cut-off condition, such that the VCU determines whether a dispatch mode of the electric energy dispatch is a target dispatch mode according to the charging and discharging completion information, and allows the BMS to accept the electric energy dispatch of the grid dispatch platform when the dispatch mode is the target dispatch mode.

6. The method according to claim 5, after the sending of the charging and discharging completion information to the vehicle control unit (VCU) of the vehicle, the method further comprising:
receiving charging and discharging end information sent by the grid dispatch platform; and
ending the electric energy dispatch in response to the charging and discharging end information sent by the VCU.

7. The method according to claim 6, wherein
the charging and discharging end information is sent to the BMS by the grid dispatch platform when it is determined that an electric energy dispatch parameter acquired in real time meets a target dispatch condition,
the electric energy dispatch parameter comprising: a dispatch time parameter and/or a second electrical performance parameter of the battery,
wherein, when the electric energy dispatch parameter comprises the dispatch time parameter, the target dispatch condition consists in that the dispatch time parameter acquired in real time reaches a target dispatch time parameter; and
when the electric energy dispatch parameter comprises the second electrical performance parameter, the target dispatch condition consists in that the second electrical performance parameter acquired in real time reaches a target electrical performance parameter.

8. The method according to any one of claims 5-7, wherein
the VCU does not respond to the charging and discharging completion information when the dispatch mode is the target dispatch mode.

9. A vehicle control unit (VCU), comprising:
a first information receiving module for receiving charging and discharging completion information sent by a battery management system (BMS) during a dispatch process for an electric energy dispatch of a grid dispatch platform that is performed between a grid and a battery of the vehicle by means of a charging and discharging apparatus, wherein the charging and discharging completion information comprises dispatch mode information, and the charging and discharging completion information is sent by the BMS when a first electrical performance parameter of the battery meets a preset charging and discharging cut-off condition;
a mode determination module for determining whether a dispatch mode of the dispatch process is a target dispatch mode according to the dispatch mode information, the target dispatch mode being a two-way electric energy dispatch mode between the grid and the battery; and
a control module for allowing the BMS to accept the electric energy dispatch of the grid dispatch platform when the dispatch mode is the target dispatch mode.

10. A battery management system (BMS), comprising:
a parameter acquisition module for acquiring a first electrical performance parameter of a battery of the vehicle during an electric energy dispatch of a grid dispatch platform that is performed between a grid and the battery by means of a charging and discharging apparatus; and
an information sending module for sending charging and discharging completion information to a vehicle control unit (VCU) of the vehicle when the first electrical performance parameter meets a preset charging and discharging cut-off condition, such that the VCU determines whether a dispatch mode of the electric energy dispatch is a target dispatch mode according to the dispatch mode information in the charging and discharging completion information, and allows the BMS to accept the electric energy dispatch of the grid dispatch platform when the dispatch mode is the target dispatch mode.

11. An electric energy dispatch system, comprising:
a vehicle control unit (VCU) of claim 9, and
a battery management system (BMS) of claim 10.

12. An electric energy dispatch device, comprising: a processor, and a memory in which computer program instructions are stored, wherein
the processor reads and executes the computer program instructions to implement an electric energy dispatch method of any one of claims 1-4, or to implement an electric energy dispatch method of any one of claims 5-8.

13. A computer storage medium, wherein computer program instructions are stored in the computer storage medium, and the computer program instructions, when executed by a processor, implement an electric energy dispatch method of any one of claims 1-4, or an electric energy dispatch method of any one of claims 5-8.
